# EUROPÄISCHE PATENTSCHRIFT

(11) **EP 3 628 575 B1**
(45) Veröffentlichungstag und Bekanntmachung des Hinweises auf die Patenterteilung: **21.09.2022**
(21) Anmeldenummer: 19181945.7
(22) Anmeldetag: 24.06.2019
(51) Int. Cl.: B62D 53/00, B62D 59/04, B64F 1/32, B60P 1/00, B60P 1/02

(54) **DOLLY SOWIE VERFAHREN ZU SEINEM BETRIEB**
DOLLY AND METHOD FOR THE OPERATION OF SAME
DIABOLO ET SON PROCÉDÉ DE FONCTIONNEMENT

(30) Priorität: 22.06.2018 DE 102018210180
(43) Veröffentlichungstag der Anmeldung: 01.04.2020
(73) Patentinhaber: MULAG FAHRZEUGWERK Heinz Wössner GmbH & CO. KG, 77728 Oppenau (DE)
(72) Erfinder: Wössner, Holger, 77704 Oberkirch (DE)
(74) Vertreter: Weickmann & Weickmann PartmbB

(56) Entgegenhaltungen:
- DE-A1-102013 001 766
- DE-A1-102013 110 961
- DE-A1-102014 000 887
- DE-U1-202008 003 173
- US-A1- 2018 079 601

## Beschreibung

### I. Anwendungsgebiet

Die Erfindung betrifft Transport-Wägen, sogenannte Dollys, wie sie insbesondere auf dem Flughafen-Vorfeld zum Transportieren von Fracht oder Gepäck eingesetzt werden, aber auch auf Industriegelände oder im Hafen zum Transportieren von Ladung.

### II. Technischer Hintergrund

Zum Einsatz als Cargo-Dolly besitzen diese Transport-Wägen eine Ladeplattform oberhalb der Räder, auf der meist jeweils nur ein sogenannter Cargo-Container transportiert werden kann, bestenfalls 2 Stück gleichzeitig.

Gepäck-Dollys besitzen dagegen außer einer Ladeplattform auch an deren Rändern hochgezogene, gitterartige Seitenwände, und transportieren lose in diesen oben offenen Kasten hinein gestapelte Gepäckstücke wie Koffer und Taschen.

Ein Dolly ist in aller Regel ein reiner Anhänger, besitzt also keinen eigenen Fahrantrieb, und wird mittels einer üblichen Anhängekupplung von einem Schlepper gezogen, der meist eine Kette von mehreren Dollys hinter sich her zieht.

Dabei werden die Dollys z.B. im Terminal beladen, meist mit je einem Cargo-Container, und der Schlepper fährt die beladenen Dollys auf das Vorfeld zu dem zu beladenen Flugzeug und dem dort bereits positionierten sog. High-Loader:
Dessen zwei in der Aufsicht betrachtet aneinander anschließende Plattform-Teile sind unabhängig voneinander in der Höhe verfahrbar, meist mittels eines Scherengestänges.

Das 1. Plattform-Teil am Flugzeug wird hochgefahren meist auf eine Höhe, die mit der Höhe des Ladebodens im Flugzeug fluchtet und hinsichtlich des seitlichen Abstandes exakt zu dieser positioniert.

Der 2. Plattform-Teil wird in seiner unteren Lage beladen, indem ein Dolly direkt daneben positioniert wird und der darauf stehende Cargo-Container manuell vom Dolly auf den fluchtend auf gleicher Höhe oder knapp darunter eingestellten 2. Plattform-Teil des Highloaders geschoben wird, wofür der Ladeboden des Dolly eine Vielzahl von Rollen aufweist, die etwas über den Ladeboden nach oben vorstehen und auf denen der Cargo-Container steht.

Anschließend fährt dieser 2. Plattform-Teil den Cargo-Container hoch auf das Niveau des auf Ladehöhe befindlichen 1. Plattform-Teiles, wo er manuell oder mittels der in dem ersten Plattform-Teil antreibbaren Rollen auf das zweite Plattform-Teil und von dort ins Flugzeug gezogen oder geschoben wird.

An Personal sind hierfür also notwendig
- mindestens ein Mann im Laderaum des Flugzeuges,
- mindestens ein Mann auf dem Highloader, der in aller Regel auf dem auf- und abfahrenden 2. Plattform-Teil steht und
- der Fahrer des Schleppers der Dollys, der von dem am Highloader stehenden Dolly den Cargo-Container manuell vom Dolly auf den Highloader hinüberschiebt, und dann die Dolly-Kette um einen Dolly nach vorn verfährt, bis auf diese Art und Weise alle Dollys der Kette leer sind und für ein neues Beladen zurück gebracht werden können.

Der Schlepper, das mit Abstand gegenüber den Dollys teuerere Teil, bleibt während dieser Zeit an den Dollys angekuppelt, bis die gesamte Kette entladen ist, und ist dadurch blockiert.

Sehr häufig erfolgt die Übergabe des Containers dabei nicht direkt vom Dolly an den Highloader, sondern dazwischen wird ein selbstfahrender Container-Transporter benutzt:
Ein solcher Container-Transporter besitzt ebenfalls eine Ladeplattform, aus der Rollen nach oben vorstehen, die aber angetrieben sind, und einen darauf stehenden Container nicht nur in zwei einander entgegengesetzten Richtungen auf dem Container-Transporter verfahren können, sondern diesen auch drehen können und somit unabhängig von der Drehlage auf dem Dolly ihn in der richtigen Drehlage an den Highloader übergeben können.

Zusätzlich besitzt mancher Container-Transporter eine automatische Ladehilfe, mit der er einen Container von einem danebenstehenden Dolly auf seine eigene Ladeplattform herüber ziehen kann.

Dies entlastet den Schlepperfahrer, der diesen Vorgang nicht mehr manuell durchführen muss, aber der Schlepperfahrer wird nach wie vor vor Ort benötigt, bis die gesamte Dolly-Kette abgearbeitet ist, um die Kette immer um einen Dolly weiterzufahren, um den Nächsten zu entladen.

Steht die Dolly-Kette still, muss stattdessen der Container-Transporter für jeden Container zwischen dem entsprechenden Dolly in der Dollykette und dem Highloader hin und herfahren, was zusätzliche Zeit benötigt.

Bei der Abfertigung von Flugzeugen auf einem Flughafen stehen zwei Punkte immer im Fokus:
- eine möglichst schnelle Abfertigung des Flugzeuges, um die Standzeiten zu minimieren und
- dabei den Personaleinsatz so gering wie möglich halten, da Personal einen hohen Kostenfaktor darstellt und immer schwerer zu rekrutieren ist.

In diesem Zusammenhang ist aus der DE 102013110961 A1 ein Dolly bekannt, der über eine Hubvorrichtung zum selbstständigen Aufsatteln der Last verfügt, deren Akku vom Zugfahrzeug aus nachgeladen werden kann.

Während diese Schrift lediglich unter die Last einfahren und diese hochheben kann, besitzt die DE 102014000887 A1 eine Ladevorrichtung, mit der die Last von Dolly auf einer Fläche daneben abgestellt werden kann.

Ferner zeigt die DE 102013001766 A1 einen Dolly, der über einen eigenen Fahrantrieb und eine Energieversorgung hierfür verfügt zum autarken rangieren am Zielort des Dolly.

Weiterhin zeigt die 202008003173 U1 einen Dolly, der eine seitliche Aussparung besitzt, sodass die Last von der Seite her in den Dolly eingefahren werden kann.

Des Weiteren zeigt die US 2018/0079601 A1 ein Handling-System für Gepäckstücke, bei dem Roboter Gepäckstücke von einem anliefernden Förderband auf einen daneben stehenden Dolly umsetzen oder umgekehrt. Dabei sind im Inneren des Dollys die Gepäckstücke in mehreren Etagen übereinander gelagert, die in der Höhe verlagerbar sein können und die Gepäckstücke können auch entlang des jeweiligen Etagen-Bodens verfahren werden.

### III. Darstellung der Erfindung

**a) Technische Aufgabe**
   Es ist daher die Aufgabe gemäß der Erfindung, durch Aufrüsten des Dolly sowie eine dadurch ermöglichte andere Betriebsweise den bei jedem Cargo-Container benötigten Mann zum Hinüberschieben vom Dolly auf den Highloader einzusparen und/oder durch die Verfügbarkeit von Informationen betreffend die Dollys und/oder verfügbar am Dolly die Arbeitsabläufe zu optimieren und dadurch Personal einzusparen.
**b) Lösung der Aufgabe**
   Diese Aufgabe wird durch die Merkmale der Ansprüche 1 und 10 gelöst. Vorteilhafte Ausführungsformen ergeben sich aus den Unteransprüchen.

### Grundgedanke der Erfindung:

Falls das Hinüberschieben eines Cargo-Containers vom Dolly auf den Highloader die Ladehilfe eines zwischengeordneten Container-Transporters übernimmt, bewirkt die Automatisierung dieses Vorganges, dass ein solcher zwischengeordneter Container-Transporter nicht mehr benötigt wird, da der Cargo-Container direkt vom Dolly auf den Highloader übergeben wird.

Der Fahrer des Schleppers muss dann die Kette von Dollys jeweils um die Länge eines Dolly gegenüber der Entladeposition, dem Highloader, vorwärts fahren, und es wird zumindest die Zeit eingespart, die der Fahrer nach dem Vorwärtsfahren um einen Dolly benötigt, um aus dem Schlepper zusteigen, nach hinten zu gehen und den Container manuell vom Dolly auf den Highloader hinüber zu schieben.

Falls mindestens einer der Dolly in der Kette über einen eigenen Fahr-Antrieb und eine entsprechende Steuerung verfügt, die in der Lage ist, die Kette entweder ohne Schlepper um jeweils diese eine Dolly-Länge vorwärts zu fahren nach dem Entladen jedes Dollys, kann der Schlepper in der Zwischenzeit andere Fahrten erledigen, im Idealfall kann der Schlepper andere Transportaufgaben erledigen, beispielsweise das Herantransportieren einer mit weiteren Cargo-Containern beladenen Kette von Dollys.

Dadurch steigt auch die Auslastung des Schleppers und über den gesamten Flughafen betrachtet werden weniger Schlepper benötigt.

Dieser Entwicklungsstufe vorgelagert könnten jedoch auch zusätzlich und/oder stattdessen die Schlepper so weit automatisiert sein, dass sie in der Lage sind, eine daran hängende Kette von Dollys oder einen einzelnen Dolly autonom zu einer bestimmten Position zu verfahren, sei es zu einer Beladestation oder einer Entladestation, und dort auch autonom eine Kette von Dollys nach dem Beladen oder Entladen eines Dollys um eine Dolly-Länge vorwärts zu fahren, um die ganze Kette abzuarbeiten.

Dies kann zumindest zeitweise einen Schlepper-Fahrer einsparen.

Hinsichtlich des Verfahrens zum Betrieb eines erfindungsgemäßen Dolly wird diese Aufgabe dadurch gelöst, dass das Hinüberbewegen eines beispielsweise Cargo-Containers von oder zu der Ladeplattform des Dolly mittels einer Ladevorrichtung durchgeführt wird, die Teil des Dolly ist.

Das Hinüberbewegen, also ein Hinüberschieben oder Hinüberziehen, auf die auf gleichem Niveau, gegebenenfalls etwas tiefer liegende, übernehmende oder übergebenden Plattform oder Bauteil wird insbesondere automatisch vollzogen, indem die motorisch angetriebene Ladevorrichtung des Dollys von einer entsprechenden Steuerung des Dollys angesteuert wird.

Diese sowie alle weiteren beschriebenen Vorgänge können wahlweise automatisch von der Steuerung veranlasst werden - die zu diesem Zweck über die notwendige Sensorik und entsprechende datentechnische Verbindungen verfügen muss - oder von einem Bediener, wobei dies beispielsweise der auf dem Highloader stehende Mann übernehmen kann.

Vorzugsweise wird dabei zuvor das Erreichen einer für das Umladen ausreichend exakten Ladeposition des Dolly geprüft und an die Steuerung gemeldet oder durch ein Signal dem Bediener angezeigt.

Um die kraftgetriebene Ladevorrichtung und gegebenenfalls auch die Steuerung und/oder den Datenspeicher des Dolly mit Energie zu versorgen, wird der Dolly mit der notwendigen Energie
- entweder durch den angekuppelten Schlepper versorgt,
- und/oder von einer Ladestation für die entsprechende Energieart, die sich an einer Ladeposition für den Dolly befindet, meist im Terminal,
- und/oder durch einen am Dolly vorhandenen Generator, der mit einem der Räder wirkverbunden ist.

Unter dem Begriff kraftgetrieben soll im Rahmen der vorliegenden Erfindung verstanden werden, dass dadurch jede Art von Antrieb verstanden werden soll, außer durch manuelle Kraft. Die Kraft kann also durch einen Motor, durch einen Kraftspeicher oder jede andere Kraftquelle zur Verfügung gestellt werden, sofern die Kraftquelle kein Lebewesen ist.

Die Energieübertragung auf den Dolly und der Betrieb der Ladevorrichtung müssen zeitlich nicht zusammenfallen, da der Dolly in der Regel einen Energiespeicher, beispielsweise einen elektrischen Akku, besitzt, der auf die oben beschriebene Art und Weise nachgeladen werden kann.

Dadurch kann das Entladen des Dolly mittels der Ladevorrichtung auch nach dem Abkuppeln und Entfernen des Schleppers vom Dolly durchgeführt werden.

Da die Steuerung für das automatische Durchführen des Entladevorgangs des Dolly häufig auch externe Daten benötigt, erhält sie diese von der Steuerung entweder drahtgebunden über den angekuppelten Schlepper oder drahtlos direkt von einer zentralen übergeordneten Steuerung aus.

Der Dolly kann zunächst auch nur grob bis zur Ladeposition gefahren werden und danach oder während dessen mit überprüft werden, ob die grob erreichte Ladeposition bereits ein Umladen der Fracht erlaubt. Wenn nicht, wird der Dolly bis zu einer exakten Ladeposition weiter bewegt.

Unter einer exakten Ladeposition wird eine solche verstanden, bei der die Positionierung des Dolly zum übernehmenden oder übergebenden Fahrzeug oder Bauteil nah genug ist, um ein Umladen der Fracht mittels der Ladevorrichtung durchzuführen.

Unter einer groben Entnahmeposition wird verstanden, dass dies noch nicht möglich ist, jedoch im Fall eines Vorhandenseins eines Positions-Sensors und eines Positions-Gebers, von denen sich einer am Dolly und einer am übernehmenden oder übergebenden Fahrzeug oder Bauteil befindet, diese beiden bereits Kontakt zueinander aufnehmen und - meist über die Steuerung - Strecke und Richtung der notwendigen Nachpositionierung der beiden zueinander, in der Regel durch Bewegen des Dollys, feststellen und vorgeben kann, sei es für die Durchführung mittels der Steuerung oder durch einen Bediener.

Ist der Dolly mit einem Container oder einer anderen Last beladen, so wird dies vorzugsweise automatisch detektiert und daraufhin der Dolly von der Ladeposition so weit entfernt, dass die Ladeposition für den nächsten Dolly einer Kette oder auch ein neues Gespann aus Schlepper und mindestens einem Dolly zugänglich ist, also zumindest der erste Dolly einer solchen geschleppten nächsten Kette von Dollys die Ladeposition anfahren kann.

Der Dolly kann darüber hinaus selbstfahrend ausgebildet sein, wobei es sich um einen Minimal-Fahrantrieb handeln kann, der weder von dem Energievorrat noch der erzielbaren Geschwindigkeit in der Lage wäre, die von einem Dolly zwischen Beladeposition und Entladeposition zurückzulegenden Strecken, erst recht nicht mehrfach, innerhalb einer akzeptablen Zeit zurückzulegen.

Der Minimal-Fahrantrieb reicht dagegen aus, um den Dolly mit seiner maximal zulässigen Nutzlast über mindestens die zehnfache, besser die zwanzigfache, Länge des Dollys zu verfahren, und dabei insbesondere bis zu fünf, besser bis zu zehn, analog beladene Dollys, mit denen er mechanisch in einer Kette verbunden ist, zu ziehen oder zu schieben.

Dadurch ist es beispielsweise möglich, dass bei einer Kette von beladenen Dollys, nachdem der erste an der Ladeposition entladen wurde, der zweite Dolly der Kette, nachdem festgestellt wurde, dass er noch nicht die genaue Ladeposition erreicht hat, bis zur genauen Ladeposition mittels seines Fahrantriebes vorwärts gefahren werden kann, wobei er die mit ihm mechanisch verbunden anderen Dollys, also den ersten sowie den dritten und alle weiteren mitbewegen muss.

Da gerade für das Schieben die Dollys zu einer starren Kette verbunden sein müssen, werden hierfür vorzugsweise die Lenkungen, also Lenkeinschläge, aller Dollys dieser Kette in der Geradeausstellung eingestellt und in dieser Geradeausstellung auch fixiert, vorzugsweise automatisch.

Dann kann sich die Dolly-Kette für das Beladen oder Entladen entweder mittels eines Schleppers, insbesondere eines autonom fahrenden Schleppers, selbsttätig vorwärts bewegen, bis sich einer nach dem anderen Dolly an der Ladeposition befunden hat.

Falls sich die Dolly-Kette für das Beladen oder Entladen in der Lage ist, sich selbsttätig und ohne einen Schlepper vorwärts zu bewegen, kann der Schlepper somit in der Zwischenzeit z.B. andere Transportaufgaben erfüllen.

Der Schlepper muss hierfür jedoch beim Heranfahren der Kette aus Dollys diese, in der Regel zumindest den ersten Dolly, in einem ausreichend geringen Querabstand zum übernehmenden oder übergebenden Fahrzeug oder Bauteil, meist dem Highloader oder dem Terminal, heranfahren und im richtigen Winkel hierzu ausrichten und durch einen ausreichend langen geraden Anfahrweg vor der Ladeposition den Lenkeinschlag der Dollys auf Geradeausfahrt, also Lenkeinschlag gleich oder nahe Null, bringen, sodass er in dieser Geradeausstellung arretiert werden kann, vorzugsweise automatisch, beispielsweise mittels Einrasten.

Häufig wird die Kette von Dollys aus Platzgründen jedoch nicht in einer geraden Richtung, sondern in einem bogenförmigen Weg an der Entladeposition, beispielsweise dem Highloader, vorbeigefahren. In diesem Fall können die Lenkeinschläge der Dollys dieser Kette auch in der momentanen Stellung arretiert werden, so dass beim Vorwärtsfahren der Kette die einzelnen Dollys jeweils nahe an der Entladeposition, auch automatisch, vorbeifahren und zum Entladen oder Beladen dort jeweils angehalten werden können.

Es kann jedoch sein, dass bei herantransportierter Kette von beladenen Dollys die Ladeposition noch nicht zugänglich ist, und der Schlepper eine herantransportierte zweite Kette aus Dollys zwar in gerader und in Geradeaussichtung verriegelter Lenkeinstellung und im richtigen Quer-Abstand zur Entladeposition, aber nur in der Nähe abstellt und abkuppelt.

Der Fahrantrieb muss dann auch in der Lage sein, zunächst - nachdem die Ladeposition als zugänglich festgestellt und gemeldet wurde - die Kette bis zur Ladestation vorzufahren, also bis der erste Dolly dieser zweiten Kette die Ladeposition erreicht hat, nachdem die erste bereits entladene Kette die Ladeposition freigegeben hat, und danach wieder die Kette schrittweise für das Entladen oder Beladen weiterbewegen.

Auch das Anfahren aus der Nähe bis zur Ladeposition wird vorzugsweise nur von einem Dolly, vorzugsweise dem ersten Dolly der Kette, durchgeführt, es können jedoch durch eine übergeordnete Steuerung die Fahrantriebe aller Dollys synchron angesteuert werden, um diese Bewegung der Kette zu bewirken.

Im Grunde genügt es, wenn ein Dolly pro Kette, insbesondere der erste Dolly, einen solchen Fahrantrieb aufweist, aber die Sensorik für das Erkennen einer ausreichend exakten Positionierung etc. müsste trotzdem jeder Dolly aufweisen und dementsprechend auch einen Energiespeicher, wenn auch keinen Fahrantrieb.

Sofern das Flugzeug noch mittels einer weiteren Kette von Dollys beladen werden muss, kann der Schlepper in dieser Zeit die weitere Kette beladener Dollys an der Beladeposition abholen und zur Entladeposition fahren, bis das Flugzeug vollständig beladen ist.

Falls dies vom Bediener veranlasst wird, muss dieser hierfür die Fahrerkabine seines Schleppers nicht verlassen, zumal auch das Ankuppeln und Abkuppeln des Schleppers am Dolly ohne manuelle Tätigkeit an der Anhängekupplung automatisch erfolgen kann, und insbesondere gleichzeitig mit dem mechanischen Ankuppeln auch der vorhandene Energie-Anschluss und/oder Daten-Anschluss zwischen Schlepper und Dolly gekoppelt wird.

Gleiches gilt für das Ankuppeln eines Dolly an einem anderen Dolly, wobei ja in der Regel jeder Dolly das gleiche Kupplungsteil am Heck aufweist.

Falls bei Ankunft der zweiten Kette aus Dollys die erste Kette bereits vollständig entladen ist und der letzte Dollie die Ladeposition verlassen hat, wird der Schlepper die zweite Kette heranfahren, bis deren erster Dolly sich in der Entladeposition, zumindest in der groben Entladeposition, befindet und erst dann von der zweiten Kette abkuppeln und beispielsweise an der ersten Kette ankuppeln, die er zurück zu einer gewünschten Stelle, beispielsweise der Beladeposition für das erneute Beladen der Dollys dieser Kette, bringt, und gegebenenfalls von dort aus wieder zum Flugzeug zum Entladen der Dollys transportiert.

In der Zwischenzeit wird der Entladevorgang der zweiten Kette von Dollys ohne den Schlepper weiter durchgeführt mittels der Ladevorrichtung und des Fahrantriebes des oder der Dollys.

Hinsichtlich des Dolly muss dieser für die Durchführung eines solchen Verfahrens wie folgt ausgestattet sein:
Der Dolly verfügt außer der Grundausstattung, bestehend aus
- Ladeplattform,
- lenkbares Fahrwerk mit mindestens einem, besser zwei lenkbaren Rädern oder Allrad-Lenkung, wobei vorzugsweise die Vorderräder die lenkbaren Räder sind, indem diese entweder einzeln lenkbar sind oder mit einer gegenüber der Ladeplattform um die Hochachse schwenkbaren Deichsel wirkverbunden hinsichtlich des Lenkeinschlages oder befestigt sind, die am vorderen Ende ein Kupplungsteil einer Anhängekupplung trägt. wobei am Heck des Dolly ist das hierzu komplementäre Kupplungsteil vorhanden ist, erfindungsgemäß
- eine kraftbetriebene Ladevorrichtung
- in aller Regel eine Steuerung, um die Ladevorrichtung anzusteuern oder weitere Funktionen des Dolly anzusteuern,
- einen Energiespeicher, vorzugsweise einen elektrischen Akku, wenn der Entlade-Motor ein Elektromotor ist.

Damit dieser Energiespeicher gefüllt werden kann, besitzt der Dolly, insbesondere der Energiespeicher, entweder einen Energie-Anschluss, über den Energie in den Energiespeicher eingebracht werden kann, oder eine Wechselvorrichtung für den Energiespeicher, sodass ein leerer Energiespeicher gegen einen gefüllten auf einfache Art und Weise ausgetauscht werden kann oder einen elektrischen Generator, der mit einem der Räder des Dolly wirkverbunden ist.

Falls der Dolly eine Steuerung umfasst, benötigt diese in aller Regel auch Daten, beispielsweise von einer übergeordneten Zentralsteuerung, und wird in aller Regel auch selbst Daten an diese übergeordnete Zentralsteuerung senden müssen.

Ebenso kann es notwendig sein, dass die Steuerung eines Dollys eine Kontaktaufnahme, also Datenaustausch, mit den Steuerungen anderer Dollys, insbesondere den anderen Dollys der Kette von gekuppelten Dollys, durchführt.

Dementsprechend benötigt der Dolly, insbesondere dessen Steuerung, einen Daten-Anschluss oder eine Daten-Schnittstelle, insbesondere mittels einer drahtgebundenen oder drahtlosen Datenverbindung, insbesondere Funkverbindung.

Die Ladevorrichtung kann beispielsweise ein bekannter, üblicher antreibbarer Schubboden sein oder ein Rollenboden, bei dem eine Vielzahl von hinsichtlich der Drehachsen parallel zueinander angeordneter Rollen aus der Ladeplattform nach oben vorstehen, wobei ein Teil der Rollen gesteuert antreibbar ist - vorzugsweise in beide Drehrichtungen - von dem mindestens einen Entlade-Motor.

Die Ladevorrichtung kann jedoch genauso gut ein einfacher Schieber oder Zughaken sein, mit dem die Fracht vom Dolly herunter auf ein übernehmendes Fahrzeug oder Bauteil daneben herübergeschoben oder herübergezogen werden kann oder Rollen, auf denen durch einseitiges Anheben oder. Absenken der Rollen des Rollenbetts der Container schwerkraftbedingt vom schräg stehenden Rollenbett herab rollt...

Die Anhängekupplung ist vorzugsweise eine Kombi-Kupplung, sodass beim Ankuppeln, also Schließen der Anhänge-Kupplung, die beiden Kupplungsteile nicht nur mechanisch miteinander gekuppelt werden, sondern der in den Kupplungs-Teilen enthaltenen Energie-Anschluss und/oder Daten-Anschluss in den beiden Kupplungs-Teilen ebenfalls jeweils miteinander verbunden werden.

Für einen teilweise oder vollständig automatisierten Betrieb benötigt der Dolly die passende Sensorik, die insbesondere mit einer vorhandenen Steuerung datentechnisch verbunden ist:
Zunächst sollte ein automatisch lesbares Identifikationselement am Dolly vorhanden sein, damit an der Ladeposition der momentan zu beladende oder entladende Dolly identifiziert werden kann, zumal in einer Zentralsteuerung in der Regel eine Zuordnung des spezifischen, identifizierbaren Dolly mit der darauf befindlichen Ladung hinterlegt ist.

Der Dolly benötigt weiterhin vorzugsweise einen Positions-Sensor, um zu bestimmen, ob er sich in einer ausreichend genauen, sogenannten exakten, Entladeposition befindet, oder ein Nachpositionieren notwendig ist, insbesondere, wenn der Dolly nur in der Nähe der Entladeposition abgestellt und vom Schlepper abgekuppelt wurde.

Bevorzugt enthält der Dolly auch einen Lade-Sensor, der detektiert, ob eine bestimmte Last geladen oder entladen ist.

Da in der Regel nur ein Cargo-Container auf einem Dolly geladen wird, detektiert ein Lade-Sensor vorzugsweise, ob der Dolly vollständig entladen ist oder mit dem Soll-Gewicht des vorgesehenen einen oder auch 2 Cargo-Containern belastet ist.

Vor allem bei einem nur teilweise automatisierten Betrieb, bei dem also das Eingreifen eines Bedieners, beispielsweise des Bedieners des Highloaders, im Betrieb vorgesehen ist, sollte weiterhin ein Betätigungselement, insbesondere eine Eingabeeinheit, vorhanden sein, über die der Bediener durch entsprechende Eingabemittel die Funktionen des Dolly steuern kann.

Hierfür ist beispielsweise ein Signalgeber sinnvoll, der - beispielsweise durch ein sich änderndes Signal - anzeigt, ob sich der Dolly in der exakten Entladeposition befindet oder wie weit er von dieser noch entfernt ist.

Sofern der Dolly einen Fahrantrieb aufweist, treibt der Fahrantrieb vorzugsweise eines oder mehrere der Räder, meist die ungelenkten Räder, z.B. die Hinterräder, an, wobei der Fahrantrieb natürlich ebenfalls von der Steuerung ansteuerbar ist, falls eine solche vorhanden ist. Insbesondere umfasst der Fahrantrieb-einen elektrischen Fahr-Motor, identisch mit dem mit einem der Räder wirkverbundenen elektrischen Generator.

Ferner ist vorzugsweise eine Arretiervorrichtung vorhanden, die vorzugsweise ansteuerbar ist von der Steuerung oder vom Schlepper oder auch vom Bediener ausgelöst werden kann.

Dies ist sinnvoll, um während des selbstständigen Fahrens den Lenkeinschlag, insbesondere die Deichsel des Dollys, in der Geradeausstellung zu fixieren, da ansonsten in einer bewegten Kette, die von einem Dolly bewegt wird, bei einem geschobenen Dolly die Deichsel eine Knickstellung einnehmen könnte. Vorzugsweise werden bei dem beschriebenen Verfahren nur Cargo-Dollys benutzt, bei denen ein Cargo-Container auf einer Ladeplattform steht, der höchstens niedrige Anschläge gegen ein Verrutschen des Dollys auf der Ladeplattform aufweist, aber keine Seitenwände, sodass der Dolly nach Lösen der Anschläge und/oder Freigeben der Rollen des Rollenbodens in der Bewegungsrichtung des Rollenbodens bewegt werden kann.

Ein Gepäck-Dolly mit von der Ladeplattform aufragenden Seitenwänden kann jedoch ebenfalls verwendet werden, wenn eine der Seitenwände geöffnet werden kann und eine Öffnungsvorrichtung vorhanden ist, die diese Seitenwand von der geschlossenen in eine geöffnete Stellung verbringt, insbesondere hochfährt oder hochschwenkt, was ebenfalls vorzugsweise von der Steuerung angesteuert werden kann.

### c) Ausführungsbeispiele

Ausführungsformen gemäß der Erfindung sind im Folgenden beispielhaft näher beschrieben. Es zeigen:
- **Figuren 1a-c:**: einen Dolly in der Aufsicht, Ansicht von unten sowie in der Seitenansicht,
- **Figur 2a:**: eine Kette von Dollys, gezogen von einem Schlepper, in der Aufsicht,
- **Figur 2b:**: eine Situation beim Entladen eines Flugzeuges und
- **Figur 2c:**: eine Situation beim Beladen einer Kette von Dollys an einer Rampe.

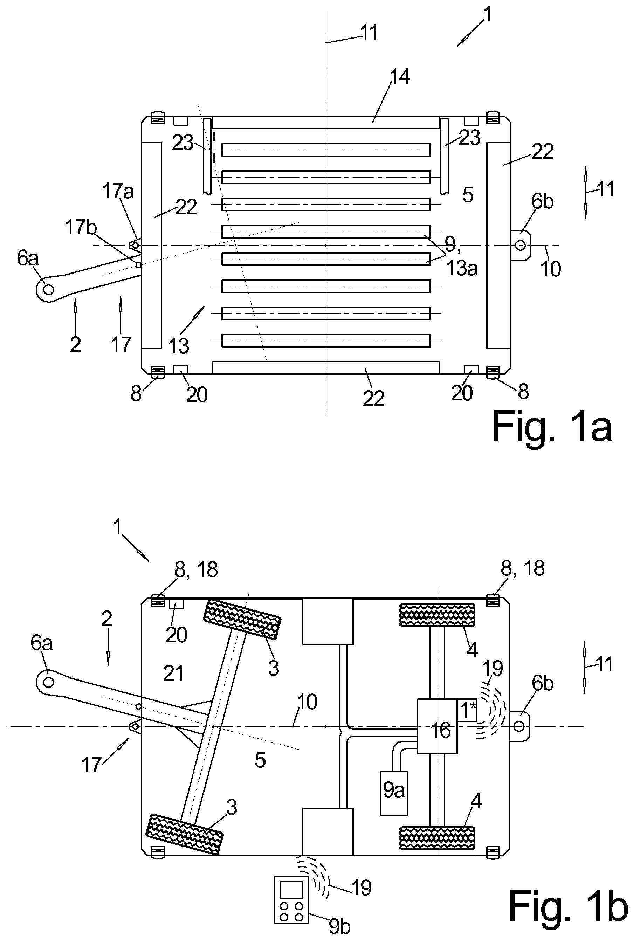

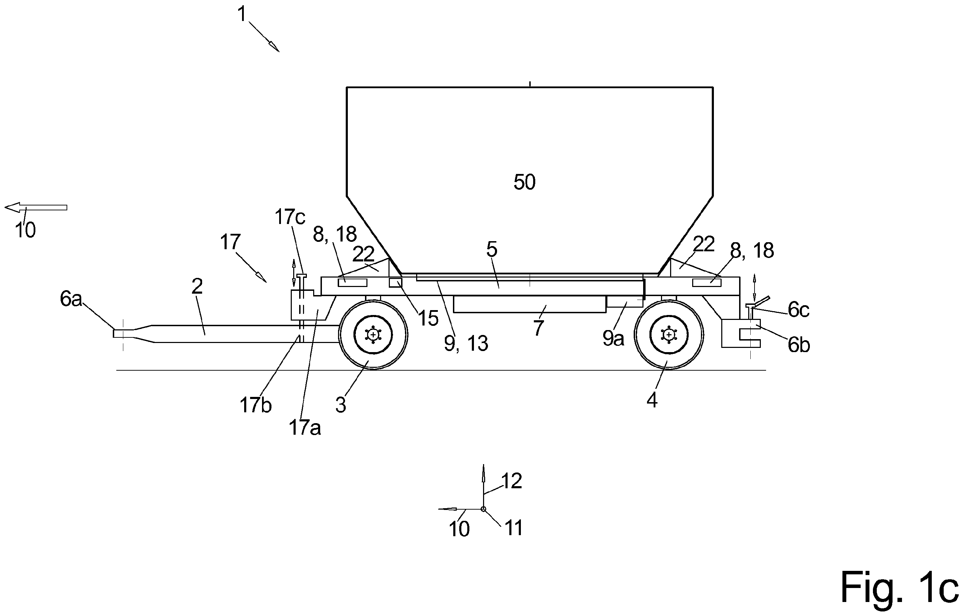

Die **Figuren 1a****-c** zeigen einen erfindungsgemäßen Dolly 1, der zunächst einmal die gattungsgemäßen Merkmale eines Dolly 1 aufweist, der zur Aufnahme je eines sogenannten Cargo-Containers 50 ausgebildet ist:
Ein solcher Cargo-Container 50 hat im Wesentlichen die Form eines Quaders, bei dem jedoch die schmalseitigen Unterkanten durch eine starke Abschrägung ersetzt sind, um gut in die untere Hälfte des etwa kreisförmigen Querschnittes eines Flugzeuges 200 mit seiner Längserstreckung in Querrichtung des Flugzeuges 200 hineinzupassen.

Ein entsprechender Dolly 1 besitzt natürlich zum Einen eine Ladeplattform 5, welche die Last, in diesem Fall den Cargo-Container 50, trägt, und welche sich über zwei Vorderräder 3 und zwei Hinterräder 4 auf dem Untergrund abstützt. Dabei sind die Hinterräder 4 meist nicht gelenkt, sondern über eine fix montierte Starrachse miteinander verbunden, während die Vorderräder 3 an einer Achse befestigt sind, welche um eine aufrechtstehende Schwenkachse für einen Lenkeinschlag verschwenkbar ist, und von der eine Deichsel 2 nach vorne und unter der Ladeplattform 5 herausragt.

Am vorderen Ende der Deichsel 2 ist als Kupplungsteil 6a meist eine Öse angeordnet, und am hinteren Ende des Dolly 1 ein dazu passendes Kupplungsmaul 6b mit einer Durchgangsöffnung und einem demgegenüber auf und ab bewegbaren Kupplungsbolzen 6c, der meist am Kupplungsmaul 6b befestigt ist.

In der Regel wird der Cargo-Container 50 in der horizontalen Querrichtung 11 auf die Oberseite der Ladeplattform 5 geschoben, wofür in diesem eine Reihe von Rollen 13a so eingelassen sind, dass sie etwas über die Oberseite des Ladebodens 5 vorstehen und der Cargo-Container 50 auf den Oberseiten dieser Rollen 13a aufsitzt.

Die Drehachsen der Rollen 13a verlaufen in Längsrichtung 10 des Dolly 1, also bei Geradeausfahrt der Fahrtrichtung des Dolly 1, und erstrecken sich in der Regel über mehr als die Hälfte seiner Länge. In Querrichtung 11. Dabei ist im Wesentlichen die gesamte Breite der Ladeplattform 5 mit beabstandet nebeneinander verlaufenden Rollen 13a besetzt, die gemeinsam den Rollenboden 13 bilden.

An der vorderen und der hinteren Schmalseite der Ladeplattform 5 sind leistenförmige, hochklappbare Anschläge 22 vorhanden, die im aktivierten, also hochgeschwenkten oder hochgefahrenen, Zustand vorzugsweise an der Frontseite und Heckseite des Cargo-Containers 50, meist dessen unteren Schrägen, anliegen.

Um ein seitliches Herabrutschen zu verhindern, können auch dort aktivierbare und deaktivierbare Anschläge 22 vorhanden sein, wie in **Figur 1a** am unteren Rand dargestellt.

Während im Stand der Technik diese Rollen 13a eines Rollenbodens 13 nicht angetrieben sind und ein Cargo-Container manuell in Querrichtung 11 auf den Dolly 1 hinüber oder von diesem herunter geschoben wird, sind erfindungsgemäß die Rollen 13a des Rollenbodens 13 mit einem Lade-Motor 9a wirkverbunden, der die Rollen 13a synchron in der gewünschten Drehrichtung in Drehung versetzen kann, oder wenigstens einige davon, wodurch eine motorisch angetriebene Ladevorrichtung 9 gebildet wird.

Eine solche motorische Ladevorrichtung 9 kann jedoch auch aus einem Schieber 14 bestehen, der - ebenfalls von einem Lademotor 9a angetrieben - einen auf dem Dolly 1 stehenden Cargo-Container 50 in Querrichtung 11 vom Dolly 1 herunterschieben kann, indem ein solcher Schieber 14 beispielsweise entlang von in dem Lade-Boden 5 eingelassenen Querführungen 23 herabgeschoben werden kann.

Ferner können erfindungsgemäß die Räder, in diesem Fall die Hinterräder 4, mittels eines Fahr-Motors 16 angetrieben werden, um den Dolly 1 geringfügig und langsam über eine begrenzte Strecke motorisch mit einem eigenen Antrieb zu verfahren.

Damit dies vorzugsweise nur in Längsrichtung 10 - also der Richtung der größten Erstreckung des Dollys 1 und bei mittig eingestellter Deichsel 2 die Fahrtrichtung 10 des Dollys 1 - möglich ist, ist ferner eine Arretiervorrichtung 17 vorhanden, mit deren Hilfe die Deichsel 2 in unterschiedlichen Schwenkstellungen, mindestens jedoch in der Geradeausstellung, arretiert werden kann.

Hierzu kann beispielsweise eine an der Ladeplattform 5 befestigte Öse 17a eine Durchgangsöffnung aufweisen, die bei in Geradeausrichtung stehender Deichsel 2 mit einer Ausnehmung 17b in der Deichsel 2 fluchtet, sodass ein Arretierbolzen 17c - manuell oder motorisch gesteuert - durch beide hindurchgeschoben werden kann und damit die Deichsel 2 in der Geradeausstellung arretiert.

Lade-Motor 9a und Fahr-Motor 16 sind vorzugsweise Elektromotoren, die aus einem elektrischen Akku 7 mit Energie versorgt werden, der sich wie die Motoren 9a, 16 an der Unterseite der Ladeplattform 5 befindet.

Um den Akku 7 laden zu können, ist an z.B. jeder der beiden Längsseiten der Ladeplattform 5 mindestens ein Energieanschluss 8 vorhanden, der mit dem Akku 7 elektrisch verbunden ist, und gleichzeitig als Datenanschluss 18 für die Steuerung 1* dienen kann.

Vorzugsweise steht der Energieanschluss 8 seitlich über die Ladeplattform 5 vor und ist in Querrichtung 11 beweglich und vorzugsweise gefedert ausgebildet, um mit analog vorhandenen Anschlüssen 8, 18 in Kontakt zu gelangen, die einerseits an einer Laderampe 99 an entsprechenden Ladestationen 98 vorhanden sind als auch an anderen Geräten, mit denen die Dollys 1 zusammenarbeiten, beispielsweise einem High-Loader 70, der zum Be- oder Entladen eines Flugzeuges 200 neben diesem aufgebaut ist zur Übergabe der Cargo-Container 50, und bei dem solche Anschlüsse 8, 18 auf der den Dollys 1 zugewandten Seite vorhanden sind.

Um auch bei nicht exakt an den Ladeanschluss zum Beispiel einer Rampe 99 herangefahrenen Dolly 1 dessen Energie-Anschluss 8 zu erreichen, können die entsprechenden Anschlüsse auf Seite der Rampe 99 auch als Lade-Roboter ausgebildet sein, indem der rampen-seitige Energie-Anschluss zumindest in 2 Raumrichtungen gesteuert so belegbar ist, dass er den zunächst noch davon entfernten Energie-Anschluss des Dolly erreicht.

Auch der Akku eines elektrisch betriebenen Schleppers 100 kann auf diese Art und Weise von einem Energie-Anschluss 8, der sich an z.B. einer Laderampe 99 befindet, geladen werden.

Alternativ und/oder zusätzlich kann ein mit einem der Räder festverbundene elektrischer Generator vorhanden sein, der mit dem erzeugten Strom den Akku 7 nachlädt. Insbesondere kann ein elektrischer Fahr-Motor 16 so ausgebildet sein, dass er wahlweise als Motor oder elektrischer Generator betrieben werden kann.

Vorzugsweise umfasst der Dolly 1 auch - insbesondere an seinen Längsseiten - mindestens einen Positions-Sensor 20, der die Position des Dolly 1 zu einem Gegenelement, welches von dem Positions-Sensor 20 erkannt wird und an der Laderampe 99 oder dem High-Loader 70 vorhanden ist, erkannt werden kann, und gegenüber bei dem der Position-Sensor 20 den Abstand hierzu und Entfernung hierzu ermitteln kann.

Vorzugsweise besitzt jeder Dolly 1 auch ein Identifikationselement 15, meist ebenfalls an einer der Seiten der Ladeplattform 5 des Dolly 1 angeordnet, welches den Dolly 1 eindeutig identifiziert und entweder für den Menschen lesbar oder verschlüsselt und/oder durch ein Lesegerät lesbar ist. Vorzugsweise umfasst auch jeder Dolly 1 eine Steuerung 1^{*}, welche alle beweglichen, angetriebenen Teile des Dolly 1 steuert, also insbesondere die beiden Motoren 9a, 16, und vorzugsweise auch die Ladevorgänge des elektrischen Akku 7. Die Steuerung 1^{*} umfasst vorzugsweise auch eine entweder am Dolly 1 oder drahtlos damit verbunden als separates Teil ausgebildete Bedieneinheit, über die insbesondere der Steuerung 1^{*} die gewünschten, von der Steuerung 1^{*} durchzuführenden, Arbeitsabläufe vorgegeben werden können.

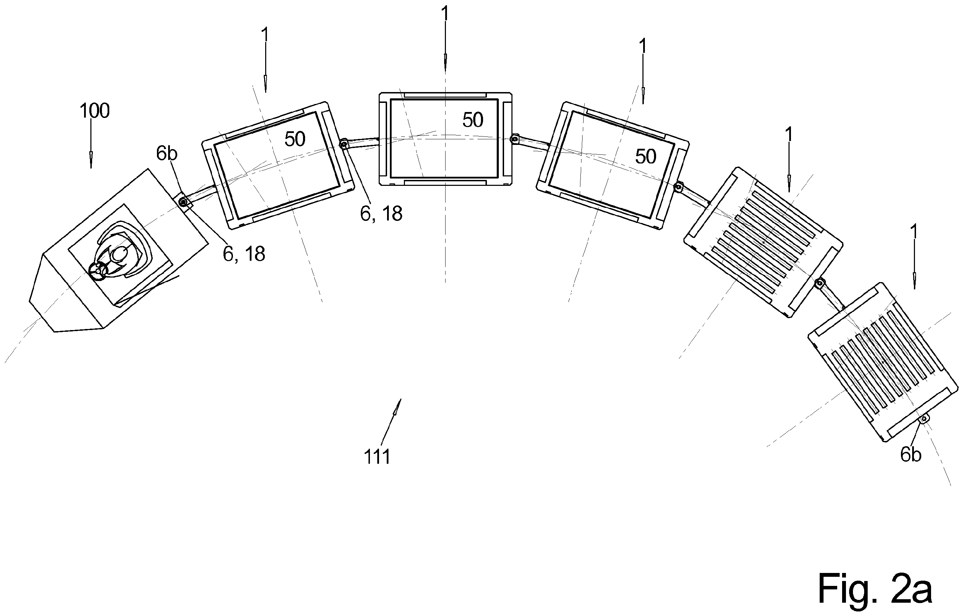

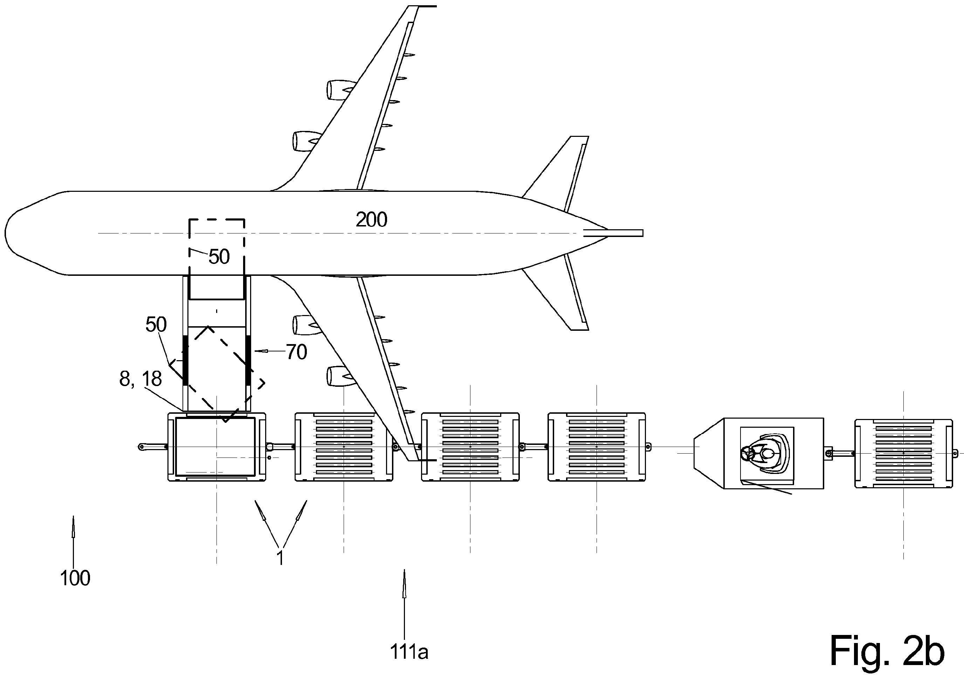

Mit einer solchen Ausstattung können Dollys 1 - die meist aneinander gekuppelt als Kette 111 von einem Schlepper 100, an den die Kette angekuppelt ist, gemäß **Figur 2a****,** **b** gezogen werden - wie folgt personalsparend eingesetzt werden:
**Figur 2b** zeigt ein Flugzeug 200, welches entladen werden soll, und neben dessen Ladeluke bereits ein High-Loader 70 aufgebaut ist mit einer ersten Kette 111a von Dollys 1, die ein Schlepper 100 herantransportiert hat und deren erster Dolly 1 in definierter Übernahme-Position neben dem High-Loader 70 steht und bereits mit einem Cargo-Container 50 beladen ist.

Der Schlepper 100, der diese erste Kette 111a herangeschleppt hat, ist bereits von der Kette 111a abgekuppelt und fährt zu seinem nächsten Transportauftrag.

Nachdem der erste Dolly 1 bereits mit einem Cargo-Container 50 beladen ist, meldet dessen Ladesensor 21 dies an die Steuerung 1* des Dolly 1, woraufhin diese Steuerung 1* den Fahrantrieb des ersten Dolly 1 in Gang setzt und den ersten Dolly samt der daran hängenden weiteren Dollys 1 dieser ersten Kette 111a vorwärts fährt, bis der Positions-Sensor 20 des nächsten Dolly 1 meldet, dass er sich in der definierten Übergabeposition zum High-Loader 70 befindet. Dann wird dieser nächste Dolly 1 vom High-Loader 70 mit einem Cargo-Container 50 beladen, wobei die Rollen 13a in eine solche Drehrichtung angetrieben werden, dass sie den Dolly 1 automatisch auf dessen Ladeplattform 5 herüber ziehen, sobald sie in Kontakt mit dem Boden des Dolly 1 stehen.

Je nach Ausrichtung der Dollys 1 im Flugzeug 200 kann vor dem übernehmen auf den Dolly 1 eine Drehung des Cargo-Containers 50 um die Hochachse um 90° notwendig sein, was vom High-Loader 70 durchgeführt werden kann.

Dies wird für alle Dollys 1 der Kette 111a durchgeführt, bis alle Dollys 1 dieser Kette 111a beladen sind.

Zu diesem Zweck müssen die Steuerungen 1* der Dollys 1 miteinander kommunizieren, wobei vorzugsweise eine der Steuerungen, meist die des ersten oder letzten Dolly 1 der Kette 111a, als Master-Steuerung ausgelegt ist, deren Priorität höher liegt als die der Steuerung 1* der einzelnen Dollys 1.

Die datentechnische Verbindung der Steuerungen 1* der Dollys 1 kann über die Anhängekupplung 6 zwischen den Dollys 1 erfolgen, indem diese eine kombinierte Kupplung mit integriertem Datenanschluss 18 ist, oder die Steuerungen 1* können über Funkverbindungen 19 miteinander kommunizieren.

Die Steuerungen 1*, insbesondere die nach Zusammenstellen einer Kette 111a als Master-Steuerung festgelegte Steuerung 1*, können die Kette 111a auch vorwärtsfahren, indem die Fahrantriebe aller Dollys 1 der Kette 111a synchron angetrieben werden, sodass der einzelne Fahrantrieb nur über eine sehr geringe Leistung verfügen muss, und auch der elektrische Akku 7 nur eine geringe Kapazität benötigt, um einen Dolly nur über die Länge beispielsweise einer solchen Kette 111a vorwärts zu bewegen.

In der Zeit, in der auf diese Art eine solche erste Kette 111a nacheinander mit Cargo-Containern 50 beladen wird, kann der Schlepper 100, der diese erste Kette 111a transportiert hat, bereits eine zweite Kette 111b mit leeren Dollys 1 zum Flugzeug herantransportieren und gegebenenfalls dort auch in Wartestellung abstellen, wie in **Figur 2b** dargestellt.

Vorzugsweise wird die vom Schlepper 100 abgekuppelte, erste Kette 111a jedoch vollständig beladen und fährt dann ausreichend weit von dem High-Loader 70 weg, sodass die zweite Kette 111b von Dollys 1 vom Schlepper 100 so weit herangefahren werden kann, dass sich der erste Dolly 1 dieser zweiten Kette 111b an der Übergabestation, also an der Übergabeposition, also am High-Loader 70, befindet.

Er kann dann von der zweiten Kette 111b abkuppeln, zur wartenden, beladenen ersten Kette 111a fahren, diese ankuppeln und zu einer Stelle bringen, an der die Dollys dieser ersten Kette 111a entladen werden, beispielsweise zu der Rampe 99.

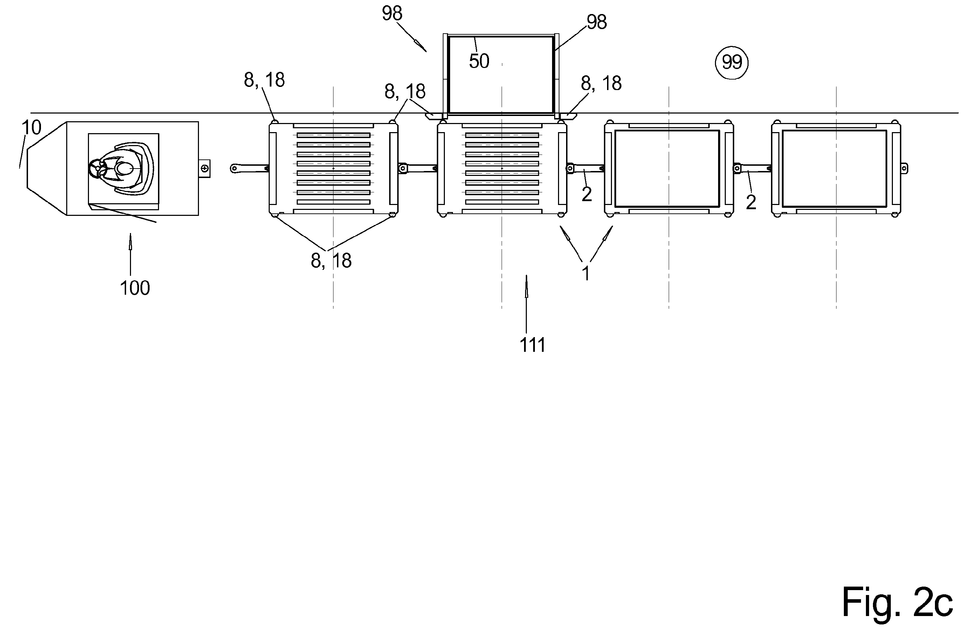

Auch an der Laderampe 99 kann gemäß **Figur 2c** das in diesem Fall Entladen der Kette 111 umgekehrt analog durchgeführt werden, ohne dass die ganze Zeit ein Schlepper 100 angekuppelt an der Kette 111 benötigt wird:
Sobald der Schlepper 100 den ersten Dolly 1 der Kette 111 an der definierten Übergabe-Position einer der einzelnen, entlang der Rampe 99 ausgebildeten Ladestationen 98 und dem dort vorhandenen Energieanschluss 8, und eventuell ebenfalls vorhandenen Datenanschluss 18 positioniert hat, wird von dem entsprechenden, an der Übergabe--Position befindlichen Dolly 1 die Ladevorrichtung 9 in Gang gesetzt und automatisch der darauf stehende Cargo-Container 50 auf die Ladestation 98 der Laderampe 99 hinübergeschoben, die beispielsweise durch seitliche Führungen begrenzt ist.

Anschließend wird die Kette 111 - nachdem der Lade-Sensor 21 des ersten Dolly 1 gemeldet hat, dass der Dolly 1 nicht mehr beladen ist - veranlasst von der Steuerung 1* des ersten Dollys 1 oder einer übergeordneten Master-Steuerung der zusammenarbeitenden Steuerung der gesamten Kette 111 - um eine Dolly-Länge vorwärts gefahren, vorzugsweise entlang der Rampe 99, bis sich der zweite Dolly 1 der Kette 111 an der Übernahme-Position, also an der Ladestation 98, befindet und ebenfalls mittels seiner Ladevorrichtung 9 den darauf stehenden Cargo-Container 50 auf die Laderampe 99 hinüber bewegt.

Bis die Kette 111 entladen ist, kann der Schlepper 100 andere Aufgaben wahrnehmen, beispielsweise eine andere, am Flugzeug inzwischen beladene Kette, dort abholen und zur Laderampe 99 bringen.

### BEZUGSZEICHENLISTE

- 1: Dolly
- 1*: Steuerung
- 2: Deichsel
- 3: Vorderräder
- 4: Hinterräder
- 5: Ladeplattform
- 6: Anhängekupplung
- 6a, b: Kupplungsteil
- 6c: Kupplungsbolzen
- 7: Energiespeicher, Akku
- 8: Energieanschluss
- 9: Ladevorrichtung,
- 9a: Lade-Motor
- 9b: Betätigungselement
- 10: Längsrichtung, Fahrtrichtung
- 11: horizontale Querrichtung
- 12: Vertikale
- 13: Rollenboden
- 13a: Rolle
- 14: Schieber
- 15: Identifikationselement
- 16: Fahr-Motor
- 17: Arretier-Vorrichtung
- 17a: Öse
- 17b: Ausnehmung
- 17c: Arretierbolzen
- 18: Datenanschluss
- 19: Funkverbindung
- 20: Positions-Sensor
- 21: Lade-Sensor
- 22: Anschlag
- 23: Querführung

- 50: Cargo-Container
- 70: Highloader
- 98: Ladestation
- 99: Rampe
- 100: Schlepper
- 111,111a, b: Kette
- 200: Flugzeug

## Patentansprüche

1. **Dolly** (1), zum Transport insbesondere eines Cargo-Containers (50), insbesondere auf dem Vorfeld eines Flughafens, mit
- Rädern (3, 4), von denen mindestens eines lenkbar ist,
- einer Deichsel (2), die am vorderen Ende ein Kupplungsteil (6a) einer Anhängekupplung (6) trägt und für den Lenkeinschlag mit den Vorderrädern (3) wirkverbunden ist,
- einem zum Kupplungsteil (6a) am vorderen Ende komplementäres Kupplungsteil (6b) am hinteren Ende des Dolly (1),
- eine Steuerung (1*), die zumindest alle beweglichen Teile des Dolly (1) steuert,
- einem Energiespeicher (7), insbesondere elektrischen Akku (7),
- einem Energieanschluss (8) zum Laden des Energiespeichers (7) oder eine Wechselvorrichtung für den Energiespeicher (7),
**gekennzeichnet durch**
- eine Ladeplattform (5),
- eine antreibbare Ladevorrichtung (9), die geeignet ist zum hinüber Bewegen der Ladung vom Dolly auf das übernehmende Fahrzeug oder Bauteil, mit Lade-Motor (9a) und einem Betätigungselement (9b),
- einen Daten-Speicher.

2. Dolly nach Anspruch 1,
**gekennzeichnet durch**
- einen Daten-Anschluss (18) oder eine drahtlose Daten-Verbindung, insbesondere eine Funkverbindung (19), über welche die Steuerung (1*) und/oder der Daten-Speicher mit Daten versorgt wird,
und/oder
- das tragbar ausgebildete Betätigungselement (9b).

3. Dolly nach einem der vorhergehenden Ansprüche,
**dadurch gekennzeichnet, dass**
die Ladevorrichtung (9)
- einen angetriebenen Schubboden oder Rollenboden (13) oder
- einen Schieber (14) umfasst.

4. Dolly nach einem der vorhergehenden Ansprüche,
**dadurch gekennzeichnet, dass**
- ein Lade-Sensor (21) am Dolly (1) vorhanden ist, der den beladenen oder vollständig entladenen Zustand des Dolly (1) detektiert
und/oder
- ein automatisch lesbares Identifikationselement (15) am Dolly (1) vorhanden ist.
(Fahr-Antrieb)

5. Dolly nach einem der vorhergehenden Ansprüche,
**dadurch gekennzeichnet, dass**
- wenigstens eines der Räder, insbesondere wenigstens eines der Hinterräder (4), mit einem ansteuerbaren Fahr-Antrieb, der insbesondere einen Fahr-Motor (16) umfasst, wirkverbunden ist,
- der insbesondere von der Steuerung (1*) ansteuerbar ist.

6. Dolly nach einem der vorhergehenden Ansprüche,
**dadurch gekennzeichnet, dass**
- ein Positions-Sensor (20) vorhanden ist zum Bestimmen der Position des Dolly (1), insbesondere relativ zu einem Positionsgeber und/oder
- eine Arretier-Vorrichtung (17) vorhanden ist zum Arretieren des Lenkeinschlages, insbesondere des Lenkeinschlages des einzeln lenkbaren Rades (3) oder der Deichsel-Stellung, in der GeradeausStellung oder in dem momentan vorhandenen Lenkeinschlag.
(Akku laden)

7. Dolly nach einem der vorhergehenden Ansprüche,
**dadurch gekennzeichnet, dass**
- der Dolly (1) einen Energieanschluss (8) umfasst, über den der elektrische Akku (7) geladen werden kann,
und/oder
- der Dolly (1) einen elektrischen Generator umfasst, der mit einem der Räder (3,4) hinsichtlich deren Drehung wirkverbunden ist und den erzeugten Strom in den Akku (7) einspeist
- insbesondere der elektrische Fahr-Motor (16) im angetriebenen Zustand als elektrischer Generator arbeitet.

8. Dolly nach einem der vorhergehenden Ansprüche,
**dadurch gekennzeichnet, dass**
- die mechanische Anhänge-Kupplung (6) eine Kombi-Kupplung ist, die zusätzlich zumindest den Energie-Anschluss (8), insbesondere auch den Daten-Anschluss (18), mit umfasst und
- insbesondere beim Kuppeln des mechanischen Teils der Anhänge-Kupplung (6) automatisch auch die Anschlüsse (8, 18) mit den entsprechenden Gegen-Anschlüssen am angekuppelten Dolly (1) oder Schlepper verbindet.

9. Dolly nach einem der vorhergehenden Ansprüche,
**dadurch gekennzeichnet, dass**
- die Ladeplattform (5) des Dolly (1) so ausgebildet ist, dass sie in der Lage ist, einen darauf stehenden Container (50) automatisch und insbesondere gesteuert um eine Hochachse zu drehen
und/oder
- von der Ladeplattform (5) Seitenwände nach oben aufragen und
- eine Öffnungsvorrichtung vorhanden ist zum automatischen Öffnen einer der Seitenwände.

10. **Verfahren** zum automatischen, insbesondere mannlosen, Entladen eines an einem Schlepper angehängten Dolly, indem
a) der Schlepper (100), den Dolly (1) zumindest in die Nähe, besser an, die Ladeposition bringt,
b) die Ladung vom Dolly (1) auf das übernehmende Fahrzeug oder Bauteil hinüber bewegt wird,
c) im Schritt b) das Bewegen der Ladung motorisch vom Dolly (1) aus durchgeführt wird,,
**dadurch gekennzeichnet, dass**
- eine Kette (111) von beladenen Dollys (1) mithilfe des Schleppers (100) zumindest in die Nähe der Entladeposition transportiert wird, insbesondere der erste Dolly (1) hiervon an der Ladeposition abgestellt wird,
- der Schlepper (100) von der Kette (111) abgekuppelt wird,
- der Schlepper (100) zu einer anderen Kette (111) aus beladenen Dollys(1), insbesondere im Terminal, fährt und diese Kette (111) ankuppelt und zur Entladeposition schleppt
- und für den Fall, dass diese Schritte vom Bediener (B) durchgeführt werden, er hierfür den Schlepper (100) nicht verlässt.

11. Verfahren nach Anspruch 10,
**dadurch gekennzeichnet, dass**
- eine Steuerung (1*) oder der Bediener (B) die Entlade-Vorrichtung (5) aktiviert, insbesondere der Bediener (B) von seiner Position im Schlepper (100) oder im übernehmenden Fahrzeug, aus aktiviert,
- insbesondere nachdem das Erreichen der Ladeposition überprüft und insbesondere dem Bediener (B) angezeigt wurde.

12. Verfahren nach einem der vorhergehenden Verfahrensansprüche, **dadurch gekennzeichnet, dass**
- der Dolly (1) mit der für das motorische Entladen benötigten Energie vom angekuppelten Schlepper (100) oder einer an einer Ladeposition vorhandenen Energie-Ladestation oder von einem mit einem Rad (3, 4) des Dolly (1) wirkverbundenen elektrischen Generator versorgt wird.

13. Verfahren nach einem der vorhergehenden Verfahrensansprüche, **dadurch gekennzeichnet, dass**
- die Steuerung (1*) des Dolly (1) mit den für das automatische Beladen oder Entladen benötigten Daten drahtgebunden vom angekuppelten Schlepper (100) oder drahtlos von einer zentralen Steuerung aus versorgt wird
und/oder
- der Schritt c) nach dem Abkuppeln und Entfernen des Schleppers (100) vom Dolly (1) durchgeführt wird.

14. Verfahren nach einem der vorhergehenden Verfahrensansprüche, **dadurch gekennzeichnet, dass**
- der Dolly (1) nach Einnehmen der groben Ladeposition automatisch verfahren wird bis zur exakten Ladeposition, insbesondere unter Nutzung eines sich mit dem Abstand zur exakten Ladeposition ändernden Signals oder automatisch
und/oder
- das Entfernen des zu entladenen Dolly (1) von der Entladeposition nach der Anzeige, dass der Dolly (1) entladen ist, durchgeführt wird, insbesondere automatisch.
(Selbstfahrend)

15. Verfahren nach einem der vorhergehenden Verfahrensansprüche,
**dadurch gekennzeichnet, dass**
- der Dolly (1) nach Abkuppeln vom Schlepper (100) und Abstellen in der Nähe der Ladeposition mittels seines Fahrantriebes, insbesondere automatisch, zur Ladeposition fährt,
- insbesondere während der Dolly (1) in eine zu entladende Kette (111) miteinander gekoppelter Dollys (1) eingekuppelt ist,
- insbesondere wobei die zu entladende Kette (111) miteinander gekoppelter Dollys (1) gemeinsam fährt
- insbesondere wobei der aktuell zu entladende Dolly (1) die gesamte Kette (111) schiebt und/oder zieht.

16. Verfahren nach einem der vorhergehenden Verfahrensansprüche,
**dadurch gekennzeichnet, dass**
- falls die an der Entladestation stehende erste Kette (111a) bereits vollständig entladen ist und der letzte Dolly (1) die Ladeposition, insbesondere automatisch, verlassen hat,
- der Schlepper, insbesondere gefahren vom Bediener, den 1. Dolly (1) seiner heran geschleppten 2. Kette (111b) an der Entladeposition abstellt,
- der Schlepper (100), insbesondere vom Bediener (B), abgekuppelt wird, zur in der Nähe stehenden ersten, entladenen, Kette (111a) fährt und diese ankuppelt und zum erneuten Beladen zu einer Ladeposition, insbesondere ins Terminal, schleppt,
- insbesondere der Vorgang so oft wiederholt wird, bis das Flugzeug vollständig geladen ist.

17. Verfahren nach einem der Verfahrensansprüche 10 bis 15,
**dadurch gekennzeichnet, dass**
- falls die dort stehende Kette (111a) noch nicht vollständig entladen ist und der letzte Dolly (1) die Entladeposition noch nicht verlassen, insbesondere noch nicht angefahren, hat,
entweder
- gewartet wird, bis die dort stehende 1. Kette (111a) vollständig entladen ist und die Ladeposition zugänglich ist,
- die heran geschleppte 2. Kette (111b) an der Ladeposition abgestellt wird,
- der Schlepper (100) abkuppelt wird,
- zur in der Nähe stehenden 1., entladenen Kette (111a) fährt und diese ankuppelt und zum erneuten Beladen zu einer Ladeposition, insbesondere ins Terminal, schleppt,
oder
- der 1. Dolly (1) seiner heran geschleppten 2. Kette (111) hinter der 1. Kette (111) in der Nähe der Ladeposition abgestellt,
- der Schlepper (100) abgekuppelt wird,
- nach vollständigem Entladen der 1. Kette (111a) zur dann in der Nähe stehenden 1., entladenen Kette (111a) fährt und diese ankuppelt und zum erneuten Beladen zu einer Ladeposition, insbesondere ins Terminal, schleppt,
- insbesondere der Vorgang so oft wiederholt wird, bis das Flugzeug vollständig beladen ist
- und für den Fall, dass diese Schritte vom Bediener (B) durchgeführt werden, er hierfür den Schlepper (100) nicht verlässt.

## Claims

1. **Dolly** (1), for transporting in particular a Cargo container (50), in particular on the apron of an airport, with
- wheels (3, 4), at least one of which is steerable,
- a drawbar (2) which carries a coupling part (6a) of a trailer coupling (6) at the front end and is operatively connected to the front wheels (3) for the steering angle,
- a coupling part (6b) at the rear end of the dolly (1) complementary to the coupling part (6a) at the front end,
- a control (1*) that controls at least all moving parts of the dolly (1),
- an energy storage device (7), in particular an electric battery (7),
- an energy access (8) for charging the energy storage device (7) or a changeover device for the energy storage device (7),
**characterized by**
- a loading platform (5),
- a drivable loading device (9) adapted to move the load from the dolly to the receiving vehicle or component, comprising a loading motor (9a) and an actuator (9b),
- a data memory.

2. Dolly according to claim 1,
**characterized by**
- a data access (18) or a wireless data connection, in particular a radio connection (19), via which the control unit (1*) and/or the data memory is supplied with data,
and/or
- the actuating element (9b) is portable.

3. Dolly according to any of the preceding claims,
**characterized in that**
the loading device (9) includes
- a driven push floor or roller floor (13) or
- a pusher (14).

4. Dolly according to any of the preceding claims,
**characterized in that**
- a charging sensor (21) is present at the dolly (1) which detects the loaded or completely unloaded state of the dolly (1)
and/or
- an automatically readable identification element (15) is present at the dolly (1).

5. Dolly according to any of the preceding claims,
**characterized in that**
- at least one of the wheels, in particular at least one of the rear wheels (4), is operatively connected to a controllable travel drive, which in particular comprises a travel motor (16),
- which can be controlled in particular by the control unit (1*).

6. Dolly according to any of the preceding claims,
**characterized in that**
- a position sensor (20) is present for determining the position of the dolly (1), in particular relative to a position transmitter
and/or
- a locking device (17) is provided for locking the steering angle, in particular the steering angle of the individually steerable wheel (3) or the drawbar position, in the straight-ahead position or in the momentary steering angle.

7. Dolly according to any of the preceding claims,
**characterized in that**
- the dolly (1) comprises a power access (8) via which the electric battery (7) can be charged,
and/or
- the dolly (1) comprises an electric generator which is operatively connected to one of the wheels (3, 4) with respect to their rotation and feeds the generated current into the battery (7)
- in particular the electric travel motor (16) operates as an electric generator in the driven state.

8. dolly according to any of the preceding claims,
**characterized in that**
- the mechanical trailer coupling (6) is a combined coupling which additionally includes at least the power access (8), in particular also the data access (18), and
- in particular, when coupling the mechanical part of the trailer coupling (6), also automatically connects the accesses (8, 18) with the corresponding mating accesses at the coupled dolly (1) or tractor.

9. dolly according to any of the preceding claims,
**characterized in that**
- the loading platform (5) of the dolly (1) is embodied in such a way that it is able to rotate a container (50) standing on it automatically and in particular in a controlled manner about a vertical axis
and/or
- side walls are projecing upwards from the loading platform (5) and
- an opening device is provided for automatically opening one of the side walls.

10. **Method** for the automatic, in particular unmanned, unloading of a dolly attached to a tractor, in which
a) the tractor (100) brings the dolly (1) at least close, or better to, the loading position,
b) the load is moved from the dolly (1) to the receiving vehicle or component,
c) in step b) the movement of the load is motorised from the dolly (1), ,
**characterized in that**
- a chain (111) of loaded dollies (1) is transported by the tractor (100) at least in the vicinity of the unloading position, in particular the first dolly (1) thereof is parked at the loading position,
- the tractor (100) is uncoupled from the chain (111),
- the tractor (100) moves to another chain (111) of loaded dollies (1), in particular in the terminal, and couples and tows this chain (111) to the unloading position
- and in the event that these steps are performed by the operator (B), he does not leave the tractor (100) for this purpose.

11. Method according to claim 10,
**characterized in that**
- a control (1*) or the operator (B) activates the unloading device (5), in particular the operator (B) activates it from his position in the tractor (100) or in the receiving vehicle,
- particularly after checking that the loading position has been reached and, in particular, this is indicated to the operator (B).

12. Method according to any of the preceding method claims,
**characterized in that**
- the dolly (1) is supplied with the energy required for motorised unloading from the coupled tractor (100) or an energy charging station present at a charging position or from an electric generator operatively connected to a wheel (3, 4) of the dolly (1).

13. Method according to any of the preceding method claims,
**characterized in that**
- the control unit (1*) of the dolly (1) is supplied with the data required for automatic loading or unloading by wire from the coupled tractor (100) or wirelessly from a central control unit
and/or
- step c) is performed after uncoupling and removing the tractor (100) from the dolly (1).

14. Method according to any one of the preceding method claims,
**characterized in that**
- the dolly (1) is automatically moved to the exact loading position after reaching the rough loading position, in particular using a signal that changes with the distance to the exact loading position or automatically
and/or
- the removal of the dolly (1) to be unloaded from the unloading position is carried out after the indication that the dolly (1) is unloaded, in particular automatically.

15. Method according to any one of the preceding method claims,
**characterized in that**
- the dolly (1), after being uncoupled from the tractor (100) and parked in the vicinity of the loading position, moves to the loading position by means of its travel drive, in particular automatically,
- in particular while the dolly (1) is coupled into a chain (111) of coupled dollies (1) to be unloaded,
- in particular, the coupled chain (111) of dollies (1) to be unloaded is travelling together,
- in particular, the dolly (1) currently being unloaded pushes and/or pulls the entire chain (111).

16. Method according to any of the preceding method claims,
**characterized in that**
- if the first chain (111a) standing at the unloading station is already completely unloaded and the last dolly (1) has left the loading position, in particular automatically,
- the tractor, in particular steered by the operator, places the first dolly (1) of its towed second chain (111b) at the unloading position,
- the tractor (100), in particular by the operator (B), is uncoupled, moves to the first unloaded chain (111a) standing nearby, couples it and tows it to a loading position, in particular to the terminal, for reloading,
- in particular, the process is repeated until the aircraft is fully loaded.

17. Method according to any one of method claims 10 to 15,
**characterized in that**
- if the chain (111a) standing there is not yet completely unloaded and the last dolly (1) has not yet left the unloading position, in particular has not yet reached it,
either
- it is waited until the first chain (111a) standing there is completely unloaded and the loading position is accessible,
- the towed second chain (111b) is parked at the loading position,
- the tractor (100) is uncoupled and
- drives to the nearby standing, first, unloaded chain (111a) couples and towes it to a loading position, in particular to the terminal, for reloading,
or
- the first dolly (1) of its towed second chain (111) is parked behind the first chain (111) near the loading position,
- the tractor (100) is uncoupled,
- after the first chain (111a) has been completely unloaded, moves to the first, unloaded chain (111a) then standing in the vicinity and couples it and tows it to a loading position, in particular to the terminal, for reloading,
- in particular, the process is repeated until the aircraft is fully loaded
- and in the event that these steps are performed by the operator (B), he does not leave the tractor (100) for this purpose.

## Revendications

1. **Dolly** [chariot de transport] (1), pour le transport en particulier d'un conteneur cargo (50), en particulier sur l'aire de trafic d'un aéroport, avec
- des roues (3, 4), dont au moins une est dirigeable,
- un timon (2) qui porte à l'extrémité avant une pièce d'accouplement (6a) d'un accouplement de remorque (6) et qui est en liaison fonctionnelle avec les roues avant (3) pour le braquage,
- à l'extrémité arrière du dolly (1) une pièce d'accouplement (6b) complémentaire à la pièce d'accouplement (6a) à l'extrémité avant,
- une commande (1^{∗}) qui commande au moins toutes les parties mobiles du dolly (1),
- un accumulateur d'énergie (7), en particulier un accumulateur électrique (7),
- un raccordement d'énergie (8) pour charger l'accumulateur d'énergie (7) ou
un dispositif de remplacement pour l'accumulateur d'énergie (7),
**caractérisé par**
- une plate-forme de chargement (5),
- un dispositif de chargement (9) pouvant être entraîné, qui est approprié pour déplacer la charge du dolly sur le véhicule ou l'élément de construction prenant en charge, avec un moteur de chargement (9a) et un élément d'actionnement (9b),
- une mémoire de données.

2. Dolly selon la revendication 1, **caractérisé par**
- une connexion de données (18) ou une liaison de données sans fil, en particulier une liaison radio (19), par laquelle la commande (1^{∗}) et/ou la mémoire de données sont alimentées en données,
et/ou
- l'élément d'actionnement (9b) de conception portable.

3. Dolly selon l'une quelconque des revendications précédentes,
**caractérisé en ce que**
le dispositif de chargement (9) comprend
- un fond poussant ou un fond à rouleaux (13) entraîné ou
- un poussoir (14).

4. Dolly selon l'une quelconque des revendications précédentes,
**caractérisé en ce que**
- un capteur de charge (21) est présent sur le dolly (1), qui détecte l'état chargé ou complètement déchargé du dolly (1)
et/ou
- un élément d'identification (15) à lecture automatique est présent sur le dolly (1).
(Entraînement de déplacement)

5. Dolly selon l'une des revendications précédentes,
**caractérisé en ce que**
- au moins l'une des roues, en particulier au moins l'une des roues arrière (4), est reliée de manière active à un entraînement de déplacement pouvant être commandé, qui comprend en particulier un moteur de déplacement (16),
- qui peut en particulier être commandé par la commande (1^{∗}).

6. Dolly selon l'une des revendications précédentes,
**caractérisé en ce que**
- un capteur de position (20) est présent pour déterminer la position du dolly (1), en particulier par rapport à un capteur de position
et/ou
- un dispositif de blocage (17) est présent pour bloquer l'angle de braquage, en particulier l'angle de braquage de la roue directrice individuelle (3) ou la position du timon, dans la position droite ou dans l'angle de braquage momentanément présent.
(Chargement de l'accumulateur)

7. Dolly selon l'une quelconque des revendications précédentes,
**caractérisée en ce que**
- le dolly (1) comprend une connexion d'énergie (8) par laquelle l'accumulateur électrique (7) peut être chargé,
et/ou
- le dolly (1) comprend un générateur électrique relié fonctionnellement à l'une des roues (3, 4) en vue de sa rotation et alimentant l'accumulateur (7) en courant produit,
- en particulier le moteur électrique de traction (16) fonctionne comme générateur électrique à l'état entraîné.

8. Dolly selon l'une des revendications précédentes,
**caractérisé en ce que**
- l'accouplement de remorque (6) est un accouplement combiné qui comprend en outre au moins le raccordement d'énergie (8), en particulier également la connexion de données (18), et
- en particulier, lors de l'accouplement de la partie mécanique de l'accouplement de remorque (6), relie automatiquement les raccords (8, 18) aux contre-raccords correspondants sur le dolly (1) ou le tracteur accouplé.

9. Dolly selon l'une des revendications précédentes,
**caractérisé en ce que**
- la plate-forme de chargement (5) du dolly (1) est conçue de telle sorte qu'elle est en mesure de faire tourner automatiquement, et en particulier de manière commandée, un conteneur (50) posé dessus autour d'un axe vertical
et/ou
- des parois latérales se dressent vers le haut à partir de la plate-forme de chargement (5) et
- un dispositif d'ouverture est prévu pour ouvrir automatiquement l'une des parois latérales.

10. **Procédé** de déchargement automatique, en particulier sans intervention humaine, d'un dolly accouplé à un tracteur, par le fait que
a) le tracteur (100) amène le dolly (1) au moins à proximité, de préférence à la position de chargement,
b) la charge est déplacée du dolly (1) sur le véhicule ou l'élément de construction prenant en charge,
c) à l'étape b), le déplacement de la charge est effectué par un moteur à partir du dolly (1),
**caractérisé en ce que**
- une chaîne (111) de dollys chargés (1) est transportée à l'aide du tracteur (100) au moins à proximité de la position de déchargement, en particulier le premier dolly (1) de celui-ci est déposé à la position de chargement,
- le tracteur (100) est désaccouplé de la chaîne (111),
- le tracteur (100) se déplace vers une autre chaîne (111) de dollys chargés (1), en particulier dans le terminal, et cette chaîne (111) est accouplée et remorquée vers la position de déchargement,
- et dans le cas où ces étapes sont effectuées par l'opérateur (B), celui-ci ne quitte pas le tracteur (100) pour ce faire.

11. Procédé selon la revendication 10,
**caractérisé en ce que**
- une commande (1^{∗}) ou l'opérateur (B) active le dispositif de déchargement (5), en particulier l'opérateur (B) l'active à partir de sa position dans le tracteur (100) ou dans le véhicule de prise en charge,
- en particulier après que l'atteinte de la position de chargement a été vérifiée et en particulier signalée à l'opérateur (B).

12. Procédé selon l'une des revendications de procédé précédentes,
**caractérisé en ce que**
- le dolly (1) est alimenté en énergie nécessaire au déchargement motorisé par le tracteur (100) accouplé ou par une station de chargement d'énergie présente à une position de chargement ou par un générateur électrique relié fonctionnellement à une roue (3, 4) du dolly (1).

13. Procédé selon l'une des revendications précédentes,
**caractérisé en ce que**
- la commande (1^{∗}) du dolly (1) est alimentée en données nécessaires au chargement ou au déchargement automatique par fil depuis le tracteur (100) accouplé ou sans fil depuis une commande centrale
et/ou
- l'étape c) est exécutée après que le tracteur (100) a été désaccouplé et retiré du dolly (1).

14. Procédé selon l'une des revendications de procédé précédentes,
**caractérisé en ce que**
- après avoir pris la position de chargement grossière, le dolly (1) est déplacé automatiquement jusqu'à la position de chargement exacte, en particulier en utilisant un signal qui varie avec la distance jusqu'à la position de chargement exacte, ou automatiquement
et/ou
- l'enlèvement du dolly (1) à décharger de la position de déchargement est effectué après l'indication que le dolly (1) est déchargée, en particulier automatiquement.
(Automoteur)

15. Procédé selon l'une des revendications de procédé précédentes,
**caractérisé en ce que**
- le dolly (1), après avoir été désaccouplé du tracteur (100) et stationné à proximité de la position de chargement, se déplace vers la position de chargement au moyen de son mécanisme de déplacement, en particulier automatiquement,
- en particulier pendant que le dolly (1) est accouplé à une chaîne (111) à décharger de dollys (1) accouplés entre elles,
- en particulier la chaîne (111) à décharger de dollys (1) acccouplés entre elles se déplace en commun,
- en particulier dans lequel le dolly (1) actuellement à décharger pousse et/ou tire l'ensemble de la chaîne (111).

16. Procédé selon l'une des revendications de procédé précédentes,
**caractérisé en ce que**
- si la première chaîne (111a) se trouvant au poste de déchargement est déjà entièrement déchargée et si le dernier dolly (1) a quitté la position de chargement, en particulier automatiquement,
- le tracteur, en particulier conduit par l'opérateur, dépose le premier dolly (1) de sa deuxième chaîne (111b) remorquée à la position de déchargement,
- le tracteur (100), en particulier conduit par l'opérateur (B), est désaccouplé, se déplace vers la première chaîne (111a) déchargée se trouvant à proximité, l'accouple et la ramène à une position de chargement pour la charger à nouveau, en particulier dans le terminal,
- en particulier en répétant l'opération autant de fois que nécessaire jusqu'à ce que l'avion soit complètement chargé.

17. Procédé selon l'une des revendications 10 à 15,
**caractérisé en ce que**
- si la chaîne (111a) qui s'y trouve n'est pas encore complètement déchargée et si le dernier dolly (1) n'a pas encore quitté la position de déchargement, en particulier n'y est pas encore arrivée,
soit
- attendre que la première chaîne (111a) y présente soit complètement déchargée et que la position de chargement soit accessible,
- soit la deuxième chaîne (111b) remorquée est déposée à la position de chargement,
- le tracteur (100) est désaccouple,
- se déplace vers la première chaîne déchargée (111a) se trouvant à proximité, l'accouple et la remorque vers une position de chargement, en particulier vers le terminal, pour un nouveau chargement,
ou
- le premier dolly (1) de sa deuxième chaîne (111) remorquée est garé derrière la première chaîne (111) à proximité de la position de chargement,
- le tracteur (100) est désaccouplé,
- après le déchargement complet de la première chaîne (111a), il se déplace vers la première chaîne (111a) déchargée qui se trouve alors à proximité, l'accouple et la remorque vers une position de chargement, en particulier vers le terminal, pour un nouveau chargement,
- en particulier, l'opération est répétée autant de fois que nécessaire jusqu'à ce que l'avion soit entièrement chargé ,
- et dans le cas où ces étapes sont effectuées par l'opérateur (B), celui-ci ne quitte pas le tracteur (100) à cet effet.
